# EUROPÄISCHE PATENTSCHRIFT

(11) **EP 3 794 246 B1**
(45) Veröffentlichungstag und Bekanntmachung des Hinweises auf die Patenterteilung: **08.03.2023**
(21) Anmeldenummer: 19721536.1
(22) Anmeldetag: 25.04.2019
(51) Int. Cl.: F16D 55/08, F16D 55/22, F16D 65/00, F16D 65/12, F16D 65/18, H02K 7/102, F16D 121/14, B60B 27/00, F16F 15/12

(54) **BREMSANORDNUNG FÜR EINEN ELEKTROMOTOR**
BRAKE ASSEMBLY FOR AN ELECTRIC MOTOR
SYSTÈME DE FREINAGE POUR MOTEUR ELECTRIQUE

(30) Priorität: 14.05.2018 DE 102018003921
(43) Veröffentlichungstag der Anmeldung: 24.03.2021
(73) Patentinhaber: SEW-EURODRIVE GmbH & Co. KG, 76646 Bruchsal (DE)
(72) Erfinder: FICHTNER-PFLAUM, Gerolf, 76703 Kraichtal-Unteröwisheim (DE); RIEGER, Florian, 76227 Karlsruhe (DE)
(86) Internationale Anmeldenummer: PCT/EP2019/025128
(87) Internationale Veröffentlichungsnummer: WO 2019/219243

(56) Entgegenhaltungen:
- DE-A1- 10 236 860
- DE-A1-102015 001 442

## Beschreibung

Die Erfindung betrifft eine Bremsanordnung für einen Elektromotor.

Es ist allgemein bekannt, dass Bremsmotoren einen Elektromotor mit einer Bremse aufweisen.

Aus der DE 10 2006 010 656 B3 ist eine Federdruckbremse mit einer an einander abgewandten Seiten Reibflächen aufweisenden Bremsscheibe bekannt.

Aus der DE 38 44 476 C1 ist eine Reibungskupplung bekannt.

Aus der DE 10 2011 102 077 A1 ist eine Kupplungsanordnung bekannt.

Aus der DE 198 38 171 A1 ist ein Elektromotor mit Bremse bekannt.

Aus der DE 19 32 932 U ist eine elektromagnetische Bremse mit auf einer Welle axial beweglicher Bremsscheibe bekannt.

Aus der DE 601 11 429 T2 ist ein Bremssystem mit verschieblicher Bremsscheibe bekannt.

Aus der DE 10 2015 001 442 A1 ist als nächstliegender Stand der Technik eine Bremsanordnung mit einem Bremsbelagträger und Mitnehmer bekannt.

Aus der DE 102 36 860 A1 ist eine Motorbremse für einen Motor bekannt.

Der Erfindung liegt daher die Aufgabe zugrunde, eine Bremsanordnung für einen Elektromotor weiterzubilden, wobei eine Winkelerfassung der Rotorwelle des Elektromotors mit hoher Genauigkeit ausführbar sein soll.

Erfindungsgemäß wird die Aufgabe bei der Bremsanordnung für einen Elektromotor nach den in Anspruch 1 angegebenen Merkmalen gelöst.

Wichtige Merkmale der Erfindung bei der Bremsanordnung für einen Elektromotor sind, dass die Bremsanordnung
- einen Bremsbelagträger,
- einen Mitnehmer und
- eine Welle
aufweist,
wobei der Mitnehmer ein inneres und ein äußeres Mitnehmerteil aufweist, welche mittels einer Zwischenschicht miteinander verbunden sind, insbesondere so dass der Mitnehmer als Metall-Kunststoff-Verbundteil ausgeführt ist,
wobei der Bremsbelagträger eine Innenverzahnung aufweist, welche mit einer Außenverzahnung des äußeren Mitnehmerteils im Eingriff ist, so dass der Bremsbelagträger drehfest aber axial verschiebbar mit dem Mitnehmer, insbesondere mit dem äußeren Mitnehmerteil und/oder der Welle, verbunden ist,
wobei das innere Mitnehmerteil drehfest, insbesondere mittels Passfederverbindung, mit der Welle verbunden ist, insbesondere spielfrei verbunden ist,
insbesondere wobei das innere Mitnehmerteil, das äußere Mitnehmerteil, die Zwischenschicht und/oder der Mitnehmer jeweils als Ringteil ausgeführt ist.
insbesondere wobei das äußere Mitnehmerteil an seiner radial äußeren Oberfläche eine Verzahnung, insbesondere Außenverzahnung, aufweist, welche mit der Innenverzahnung des Bremsbelagträgers im Eingriff ist.

Insbesondere ist die axiale Richtung parallel zur Richtung der Drehachse ausgerichtet ist

Von Vorteil ist dabei, dass Drehmomentrucke nur abgedämpft in die Welle eingeleitet werden und somit die Winkelerfassung der Welle ungestört ausführbar ist.

Bei einer vorteilhaften Ausgestaltung weist der Mitnehmer ein inneres Mitnehmerteil und ein äußeres Mitnehmerteil sowie eine radial zwischen innerem und äußerem Mitnehmerteil angeordnete Zwischenschicht auf,
insbesondere wobei das innere Mitnehmerteil und das äußere Mitnehmerteil voneinander beabstandet sind und/oder wobei das innere und das äußere Mitnehmerteil jeweils ringförmig ausgebildet ist und/oder wobei das innere Mitnehmerteil radial innerhalb des äußeren Mitnehmerteils angeordnet ist. Von Vorteil ist dabei, dass eine Dämpfung von Drehmomentrucken und/oder durch den Mitnehmer durchgeleiteten Drehmomentflüssen ermöglicht ist. in Zusammenwirkung mit der Dämpfung von in Umfangsrichtung von der Ankerscheibe zum Gehäuseteil und/oder Magnetkörper hin eingeleiteten Stößen ist ein hoher Schutz für einen an dem Motor angeordneten Winkelsensor, insbesondere eine mit der Rotorwelle drehfest verbundene Sensorwelle erreicht. Die Winkelerfassung ist also robust gegen störende Einflüsse ausführbar, welche beim Betrieb der elektromagnetisch betätigbaren Bremse erzeugt werden.

Bei einer vorteilhaften Ausgestaltung weist das innere Mitnehmerteil nach radial außen, insbesondere in die Zwischenschicht, hervorragende Stegbereiche auf. Von Vorteil ist dabei, dass die Zwischenschicht elastischer und/oder weicher ausführbar ist als die beiden Mitnehmerteile. Somit ist eine Dämpfung durch die Zwischenschicht durchgeleiteter Kraftflüsse und/oder Drehmomentflüsse erreichbar.

Bei einer vorteilhaften Ausgestaltung weist das äußere Mitnehmerteil nach radial innen, insbesondere in die Zwischenschicht, hervorragende Stegbereiche auf. Von Vorteil ist dabei, dass die Zwischenschicht weicher als das äußere und/oder innere Mitnehmerteil ausführbar ist. Somit ist eine Dämpfung durch die Zwischenschicht durchgeleiteter Kraftflüsse und/oder Drehmomentflüsse erreichbar.

Bei einer vorteilhaften Ausgestaltung ist die Zwischenschicht aus einem Kunststoff, insbesondere aus einem Polymer und/oder aus einem Elastomer, gefertigt und/oder die beiden Mitnehmerteile sind aus Metall, insbesondere Stahl, gefertigt. Von Vorteil ist dabei, dass eine kostengünstige einfache Dämpfung vorsehbar ist.

Bei einer vorteilhaften Ausgestaltung überlappt der von dem äußeren Mitnehmerteil, insbesondere der von den Stegbereichen des äußeren Mitnehmerteils, überdeckte Radialabstandsbereich mit dem von dem inneren Mitnehmerteil, insbesondere mit dem von den Stegbereichen des inneren Mitnehmerteils, überdeckten Radialabstandsbereich. Von Vorteil ist dabei, dass bei Versagen der Zwischenschicht ein in Umfangsrichtung wirksamer,
spielbehafteter Formschluss zwischen den beiden Mitnehmerteilen wirksam wird. Somit wird dann bei Zustandsänderung der Bremsanordnung, insbesondere also beim Lüften oder Einfallen der Bremsanordnung, ein Geräusch infolge Aufeinandertreffens der Flanken der Stegbereiche erzeugt, also ein akustisches Warnsignal.

Bei einer vorteilhaften Ausgestaltung weist das äußere Mitnehmerteil an seiner radial äußeren Oberfläche eine Verzahnung, insbesondere Außenverzahnung, auf, welche mit der Innenverzahnung des Bremsbelagträgers im Eingriff ist. Von Vorteil ist dabei, dass der Mitnehmer insgesamt mehrteilig ausgeführt ist, insbesondere also Verbundteil. Dabei ist aber die äußere Abmessung wie bei einem einteilig ausgeführten Mitnehmer ausgeführt. Ein bekannter einteiliger Mitnehmer ist also in einfacher Weise durch einen mehrteilig ausgeführten Mitnehmer ersetzbar, wobei dadurch die verbesserte Dämpfung erreichbar ist.

Bei einer vorteilhaften Ausgestaltung ist die Welle in dem im Flanschteil aufgenommenen Lager und in einem weiteren Lager gelagert, welches in einem weiteren Flanschteil aufgenommen ist, wobei die Flanschteile mit einem Statorgehäuse des Motors verbunden sind,

insbesondere wobei die Welle die Rotorwelle des Motors ist.

Von Vorteil ist dabei, dass die Welle zwar drehgelagert angeordnet ist, bei Lüften oder einfallen der Bremsanordnung jedoch Stöße in die Welle eingeleitet werden, so dass B-seitig, also auf der vom Stator abgewandten Seite der Bremsanordnung ein Winkelsensor bei der Erfassung der Winkelstellung der Rotorwelle störbar wäre, wenn die Erfindung nicht mittels der im Vergleich zur zweiten Buchse weicheren ersten Buchse Stöße abdämpfbar machen würde.

Bei einer vorteilhaften Ausgestaltung weist die Bremsanordnung zusätzlich
- einen Magnetkörper
- eine Wicklung
- zumindest einen Bolzen
- ein Gehäuseteil mit Bremsfläche
- eine Ankerscheibe
- zumindest ein Federteil, insbesondere eine Gegenfeder,
- zumindest eine erste Buchse
auf,
wobei das Gehäuseteil mit dem Magnetkörper mittels des Bolzens, insbesondere zumindest in Umfangsrichtung formschlüssig, verbunden ist,
wobei die erste Buchse in einer zweiten Buchse aufgenommen ist, insbesondere in die zweite Buchse eingepresst ist,
wobei das am Gehäuseteil abgestützte Federteil die erste Buchse und/oder die zweite Buchse zum Magnetkörper hindrückt,
wobei der von der Ankerscheibe überdeckte Radialabstandsbereich den von der zweiten Buchse überdeckten Radialabstandsbereich enthält, insbesondere umfasst,
wobei der von der Ankerscheibe überdeckte axiale Bereich den von der zweiten Buchse überdeckten axialen Bereich enthält, insbesondere umfasst, oder mit ihm überlappt.

Von Vorteil ist dabei, dass die Ankerscheibe in Umfangsrichtung drehfest mit dem Magnetkörper verbunden ist, indem sie an der zweiten Buchse in Umfangsrichtung gestoppt wird. Die zweite Buchse überträgt den Aufschlagstoß über die erste Buchse an den bolzen und dieser an den Magnetkörper sowie das Gehäuseteil. Somit ist der Aufschlagstoß mittels der elastischen Ausführung der ersten Buchse abdämpfbar. Gleichzeitig fungiert die erste Buchse als axiales Gleitlager der Buchsenkombination, also der beiden pressverbundenen Buchsen, also der ersten und der zweiten Buchse.

Bei einer vorteilhaften Ausgestaltung ist die erste Buchse aus einem weicheren und/oder elastischeren Material gefertigt als die zweite Buchse. Von Vorteil ist dabei, dass der Stoß abdämpfbar ist und ein Gleitlager in axialer Richtung bereit stellbar ist, so dass bei Nachstellen der Mutter infolge Abnutzung der Bremsbeläge eine geringe Haftreibung vorhanden ist und Korrosion vermeidbar ist. Denn die Bolzen sind aus Metall, die erste Buchse jedoch ist aus Kunststoff.

Bei einer vorteilhaften Ausgestaltung ist die erste Buchse aus Gummi, einem gummierten Stoff oder einem Kunststoff, insbesondere einem Polymer, gefertigt und die zweite Buchse aus einem Metall, insbesondere aus Stahl, gefertigt. Von Vorteil ist dabei, dass ein Abdämpfen des Aufschlags der Ankerscheibe auf die zweite Buchse ermöglicht ist.

Bei einer vorteilhaften Ausgestaltung ist die erste Buchse in die zweite Buchse eingepresst,
insbesondere wobei die erste Buchse ein O-Ring ist. Von Vorteil ist dabei, dass eine feste Verbindung vorhanden ist. Außerdem sind durch die Buchsenkombination mehrere Funktionen ausführbar, wie Gleitlager, Aufschlagsdämpfung und stabile äußere Oberfläche.

Bei einer vorteilhaften Ausgestaltung ist die erste Buchse am Bolzen gleitgelagert, insbesondere also passgenau auf den Bolzen aufgesteckt ist. Von Vorteil ist dabei, dass eine Abdämpfung von Stößen und eine Gleitlagerung von der Buchsenkombination bewirkbar ist. Außerdem schlägt die Ankerscheibe an der zweiten Buchse an, welche aus einem stabilen Material fertigbar ist, das keine wesentliche Dämpfung bewirkt, aber eine hohe Standzeit erreichbar macht. Die Abdämpfung von Stößen wird von der ersten Buchse ausgeführt, die in der zweiten Buchse aufgenommen und/oder eingepresst ist.

Bei einer vorteilhaften Ausgestaltung ist die Ankerscheibe in Umfangsrichtung spielbehaftet formschlüssig mit der zweiten Buchse und/oder dem Bolzen verbunden. Von Vorteil ist dabei, dass die Ankerscheibe radial weiter ausgedehnt ist als der Bremsbelagträger und in dem radial überragenden Radialabstandsbereich der Bolzen angeordnet ist. Somit ist der Bolzen durch eine axial durch die Ankerscheibe durchgehende Ausnehmung durchführbar. Auf diese Weise ist der Bremsbelagträger in Umfangsrichtung mit der Welle frei drehbar angeordnet und die Ankerscheibe in Umfangsrichtung formschlüssig angeordnet.

Bei einer vorteilhaften Ausgestaltung ist der Bolzen mit dem Gehäuseteil schraubverbunden und ist durch eine axial durch den Magnetkörper durchgehende Ausnehmung durchgeführt, insbesondere wobei eine Mutter auf einen Gewindebereich aufgeschraubt ist, welcher auf der vom Gehäuseteil abgewandten Seite des Magnetkörpers angeordnet ist,
insbesondere wobei der Bolzen eine Stufe aufweist, mit welcher er an einer Stufe einer Stufenbohrung im Gehäuseteil anliegt. Von Vorteil ist dabei, dass bei Verschleiß der Bremsbeläge die Bremsanordnung nachstellbar ist, also der axiale Abstand zwischen Magnetkörper und Gehäuseteil anpassbar ist, wobei die Betätigung der Nachstellung, also der Mutter, von der B-Seite her ausführbar ist.

Bei einer vorteilhaften Ausgestaltung ist der Bolzen mit dem Magnetkörper schraubverbunden und durch eine axial durch das Gehäuseteil durchgehende Ausnehmung durchgeführt,
insbesondere wobei eine Mutter auf einen Gewindebereich aufgeschraubt ist, welcher auf der vom Magnetkörper abgewandten Seite des Gehäuseteils angeordnet ist,
insbesondere wobei der Bolzen eine Stufe aufweist, mit welcher er an einer Stufe einer Stufenbohrung im Magnetkörper anliegt. Von Vorteil ist dabei, dass bei Verschleiß der Bremsbeläge die Bremsanordnung nachstellbar ist, also der axiale Abstand zwischen Magnetkörper und Gehäuseteil anpassbar ist, wobei die Betätigung der Nachstellung, also der Mutter, von der B-Seite her ausführbar ist.

Bei einer vorteilhaften Ausgestaltung ist in einer Ausnehmung des Magnetkörpers die Wicklung aufgenommen und/oder die Ankerscheibe ist axiale bewegbar, spielbehaftet drehfest mit dem Magnetkörper, insbesondere mit dem Bolzen, verbunden. Von Vorteil ist dabei, dass möglichst wenig Feldlinien verloren gehen.

Bei einer vorteilhaften Ausgestaltung ist zwischen dem Gehäuseteil und der Ankerscheibe ein auf der Welle axial verschiebbarer, mit der Welle drehfest verbundener Bremsbelagträger angeordnet. Von Vorteil ist dabei, dass der Bremsbelagträger beidseitig bremsbar ist, also ein erster Bremsbelag von der Ankerscheibe beaufschlagbar ist und ein zweiter Bremsbelag auf eine Bremsfläche des Gehäuseteils drückbar ist. Die Bremsfläche ist dabei ebenso wie die Ankerscheibe fein bearbeitet, insbesondere geschliffen.

Bei einer vorteilhaften Ausgestaltung weist der Bremsbelagträger eine Innenverzahnung auf, welche mit einer Außenverzahnung im Eingriff ist, welche in die Welle eingebracht ist oder in einen Mitnehmer eingebracht ist, welcher drehfest, insbesondere mittels Passfederverbindung, mit der Welle verbunden ist,
insbesondere wobei der Mitnehmer als Ringteil ausgeführt ist. Von Vorteil ist dabei, dass mittels der Verzahnungen ein hohes Bremsmoment vom Bremsbelagträger über den Mitnehmer oder direkt in die Welle einleitbar ist.

Bei einer vorteilhaften Ausgestaltung drückt eine am Magnetkörper abgestützte Feder die Ankerscheibe vom Magnetkörper weg, insbesondere also in axialer Richtung hin zum Bremsbelagträger,
wobei bei Bestromung der Ringwicklung die Ankerscheibe zum Magnetkörper unter Überwindung der von der Feder erzeugte Federkraft hingezogen wird,
und wobei bei Nichtbestromung die Ankerscheibe von der Feder auf den Bremsbelagträger, insbesondere auf einen auf der der Ankerscheibe zugewandten Seite des Bremsbelagträgers angeordneten Bremsbelag gedrückt wird,
insbesondere so, dass der Bremsbelagträger insbesondere mit seinem anderen Bremsbelag auf das Gehäuseteil, insbesondere auf eine am Gehäuseteil ausgebildete Bremsfläche, gedrückt wird. Von Vorteil ist dabei, dass bei Nichtbestromung die elektromagnetisch betätigbare Bremsanordnung einfällt. Bei Bestromung wird jedoch die Bremsanordnung gelüftet.

Bei einer vorteilhaften Ausgestaltung wird das Gehäuseteil mit einem Flanschteil dicht und lösbar verbunden, welches ein Lager zur Lagerung der Welle aufnimmt. Von Vorteil ist dabei, dass die elektromagnetisch betätigbare Bremse als vorkomplettierte Einheit lagerbar und danach mit dem Motor verbindbar ist.

Bei einer vorteilhaften Ausgestaltung deckt ein Abdichtband den die Ankerscheibe und den Bremsbelagträger aufnehmenden Raumbereich zur Umgebung hin ab und/oder dichtet ab. Von Vorteil ist dabei, dass ein Eindringen von Schmutz in den Reibbereich verhinderbar ist.

Bei einer vorteilhaften Ausgestaltung ist der von der zweiten Buchse überdeckte axiale Bereich kleiner als der von der ersten Buchse überdeckte axiale Bereich und das Federteil drückt die erste Buchse auf den Magnetkörper hin. Von Vorteil ist dabei, dass der von der Ankerscheibe übertragene Stoß in Umfangsrichtung vom härteren Material aufnehmbar ist und somit eine hohe Standzeit erreichbar ist. außerdem drückt das Federteil die erste Buchse an, so dass das
von der Ankerscheibe gestoßene Teil, also die zweite Buchse, nicht zusätzlich begrenzt und/oder belastet ist.

Bei einer vorteilhaften Ausgestaltung ist der von der zweiten Buchse überdeckte axiale Bereich gleich oder größer als der von der ersten Buchse überdeckte axiale Bereich und das Federteil drückt die zweite Buchse auf den Magnetkörper hin. Von Vorteil ist dabei, dass die Funktion der Gleitlagerung und der Stoßabdämpfung von der ersten Buchse ausgeführt wird, während die zweite Buchse auf den Magnetkörper gedrückt wird. Somit wird der in Umfangsrichtung in die zweite Buchse eingeleitete Stoß auch zumindest anteilig von der bei relativer Verschiebung der ersten Buchse in Umfangsrichtung wirksamen Haftreibung und Gleitreibung des Reibkontaktes der zweiten Buchse mit dem Magnetkörper beziehungsweise dem Federteil abgeleitet. Die erste Buchse muss also nur restliche Stoßenergie abdämpfen.

Bei einer vorteilhaften Ausgestaltung weist die Bremsanordnung
- einen Magnetkörper,
- eine Wicklung,
- ein Gehäuseteil mit Bremsfläche und
- eine Ankerscheibe
auf,
wobei der Bremsbelagträger und die Ankerscheibe axial zwischen dem Gehäuseteil und dem Magnetkörper angeordnet sind,
wobei ein Abdichtband in einem ersten axialen Bereich mit dem Gehäuseteil und in einem zweiten axialen Bereich mit dem Magnetkörper verbunden ist, insbesondere kraftschlüssig angedrückt ist,
wobei das Abdichtband die Ankerscheibe und den Bremsbelagträger radial umgibt, insbesondere den die Ankerscheibe und den Bremsbelagträger aufnehmenden Raumbereich zur Umgebung hin abdeckt und/oder abdichtet,
wobei am Abdichtband ein nach radial innen hervorragender Nasenbereich ausgeformt ist, welcher die Ankerscheibe in axialer Richtung begrenzt.

Von Vorteil ist dabei, dass das Abdichtband einerseits als Abdichtung gegen das Eindringen von Schmutz fungiert und andererseits als die Bewegung der Ankerscheibe, insbesondere das Auftreffen der Ankerscheibe auf den Bremsbelagträger, dämpfendes Element. Dabei ist am aus Kunststoff oder Gummi gefertigtem Abdichtband der Nasenbereich einstückig, also einteilig ausgeformt. Das Abdichtband ist ringartig ausgeformt, ebenso ist der Nasenbereich ringartig ausgeformt.

Bei einer vorteilhaften Ausgestaltung ist am Magnetkörper ein Dichtring angeordnet, welcher die Ankerscheibe entgegen der axialen Richtung begrenzt,
insbesondere wobei der Dichtring in einer im Magnetkörper eingebrachten Ringnut aufgenommen ist,
insbesondere wobei die Ringachse die Drehachse der Welle ist. Von Vorteil ist dabei, dass auch auf der vom Nasenbereich abgewandten Seite der Ankerscheibe ein die Bewegung der Ankerscheibe dämpfendes Element angeordnet ist.

Bei einer vorteilhaften Ausgestaltung ist die vom Dichtring erzeugte, auf die Ankerscheibe wirkende Federkraft betragsmäßig größer als die vom elastisch gespannten, insbesondere vorgespannten, Nasenbereich erzeugte, auf die Ankerscheibe wirkende Federkraft,
insbesondere bei gelüftetem Zustand der Bremsanordnung, insbesondere also bestromter Wicklung. Von Vorteil ist dabei, dass die Rückstellwirkung der Feder nicht verringert wird und somit die Funktionsweise der Bremsanordnung gegebenenfalls verlangsamt aufrechterhalten wird.

Bei einer vorteilhaften Ausgestaltung überlappt der vom Abdichtband, insbesondere vom Nasenbereich des Abdichtbands, überdeckte Radialabstandsbereich mit dem von der Ankerscheibe überdeckten Radialabstandsbereich. Von Vorteil ist dabei, dass die Ankerscheibe an dem Nasenbereich ansteht und somit eine elastische Kraft in die Ankerscheibe eingeleitet wird.

Bei einer vorteilhaften Ausgestaltung überlappt der vom Abdichtband, insbesondere vom Nasenbereich des Abdichtbands, überdeckte axiale Bereich mit dem von dem Bremsbelagträger überdeckten axialen Bereich und/oder grenzt an den von der Ankerscheibe überdeckten axialen Bereich an, insbesondere ohne Überlappung. Von Vorteil ist dabei, dass eine kompakte Anordnung erreichbar ist. Dabei ist der Bremsbelagträger radial weniger ausgedehnt als die Ankerscheibe. In den freien Raumbereich radial außerhalb des Bremsbelagträgers ist also der Nasenbereich anordenbar. Somit ist eine möglichst kompakte Ausführung erreicht.

Bei einer vorteilhaften Ausgestaltung ist die Ringachse des Dichtrings die Drehachse der Welle. Von Vorteil ist dabei, dass die Ankerscheibe an dem zu ihrer Stirnseite parallel angeordneten Dichtring, insbesondere O-Ring, ein gleichmäßiges Anliegen erreichbar ist.

Bei einer vorteilhaften Ausgestaltung ist der Nasenbereich ringförmig und/oder in Umfangsrichtung umlaufend ausgebildet, insbesondere wobei die Ringachse des ringartigen Nasenbereichs die Drehachse der Welle ist und/oder insbesondere wobei die Symmetrieachse des Nasenbereichs die Drehachse der Welle ist. Von Vorteil ist dabei, dass das Abdichtband und der Nasenbereich in Umfangsrichtung umlaufend ausgebildet sind und somit eine einfache Herstellung ermöglicht ist, insbesondere als Strangprofil.

Bei einer vorteilhaften Ausgestaltung ist das Ringteil auf einem Radialabstand, insbesondere auf dem größten Radialabstand, angeordnet, welcher in dem von der Ankerscheibe überdeckten Radialabstandsbereich angeordnet ist. Von Vorteil ist dabei, dass eine möglichst effektive Abdämpfung erreichbar ist.

Die Erfindung wird nun anhand von schematischen Abbildungen näher erläutert:
In der Figur 1 ist eine elektromagnetisch betätigbare Bremsanordnung eines Elektromotors angeschnitten in Schrägansicht dargestellt.

In der Figur 2 ist ein vergrößerter Ausschnitt der Figur 1 dargestellt.

In der Figur 3 ist eine zugehörige Schrägansicht ohne Anschnitt gezeigt.

In der Figur 4 ist eine erfindungsgemäße elektromagnetisch betätigbare Bremsanordnung eines Elektromotors angeschnitten in Schrägansicht dargestellt, wobei ein Mitnehmer (41, 42, 43) mehrteilig ausgeführt ist.

In der Figur 5 ist der Mitnehmer (41, 42, 43) in Schrägansicht dargestellt.

Wie in den Figuren dargestellt, weist die Bremsanordnung eine Welle, insbesondere Rotorwelle 2 des Elektromotors, auf, wobei auf der Welle ein ringförmiger Mitnehmer 1 aufgeschoben ist und mittels Passfederverbindung drehfest verbunden ist.

Der Mitnehmer 1 weist an seinem Außenumfang eine Verzahnung, insbesondere Außenverzahnung auf. Vorzugsweise weist die Außenverzahnung keinen Schrägungswinkel auf, ist also geradverzahnt, so dass sich die Zähne jeweils in axialer Richtung erstrecken.

Auf den Mitnehmer 1 ist ein Bremsbelagträger 3 aufgeschoben, der eine Innenverzahnung aufweist, welche mit der Außenverzahnung im Eingriff ist. somit ist der Bremsbelagträger 3 drehfest, aber axial verschiebbar mit dem Mitnehmer 1 verbunden.

Der Bremsbelagträger 3 weist axial beidseitig Bremsbeläge auf.

Ein Magnetköper 4, insbesondere aus Stahlguss, weist eine ringförmige Ausnehmung auf, in welche eine Ringwicklung 5 eingelegt ist.

Axial gerichtete Bolzen 6, insbesondere Gewindebolzen, sind durch axial durch den Magnetkörper 4 durchgehende Ausnehmungen geführt und mit ihrem Gewindebereich in Gewindebohrungen eines Gehäuseteils 11 eingeschraubt.

Auf der vom Gehäuseteil 11 abgewandten Seite des Magnetkörpers 4 ist auf einen weiteren Gewindebereich de r Bolzen 6 jeweils eine Mutter 6 aufgeschraubt, so dass der Magnetkörper auf einen maximalen Abstand zum Gehäuseteil 11 begrenzt ist.

Eine jeweilige am Gehäuseteil 11 abgestützte Gegenfeder, insbesondere Spiralfeder, ist auf den Bolzen 6 aufgesteckt. Und drückt auf eine erste Buchse 7, insbesondere Kunststoffbuchse.

Die erste Buchse ist in eine etwas größere Zweite Buchse 8 eingepresst, welche aus einem anderen Material gefertigt ist als die erste Buchse.

Hierbei wird die zweite Buchse 8 bevorzugt aus Metall gefertigt, insbesondere aus Stahl.

Somit drückt also die Gegenfeder 10 die erste Buchse 7 auf das Gehäuseteil 4.

Eine Ankerscheibe 9 ist axial zwischen dem Bremsbelagträger 3 und dem Magnetkörper 4 angeordnet.

Der von der Ankerscheibe überdeckte Radialabstand umfasst den von den Bolzen 6 samt den auf die Bolzen aufgesteckten ersten Buchsen 7 mit zweiten Buchsen 8 überdeckten Radialabstandsbereich.

Somit ragen also die Bolzen 6 samt den auf die Bolzen 6 aufgesteckten ersten Buchsen 7 zusammen mit den die ersten Buchsen 7 aufnehmenden zweiten Buchsen 8 axial durch die Ankerscheibe 4 durchgehende Ausnehmungen hindurch.

Auf diese Weise ist die Ankerscheibe 9 zwar spielbehaftet drehfest mit dem Magnetkörper verbunden, aber axial bewegbar angeordnet.

Eine in den Figuren nicht dargestellte, am Magnetkörper abgestützte Feder drückt die Ankerscheibe 9 weg vom Magnetkörper 4, insbesondere also in axialer Richtung hin zum Bremsbelagträger 3.

Bei Bestromung der Ringwicklung 5 wird die Ankerscheibe 9 zum Magnetkörper 4 hingezogen, wobei die Ankerscheibe 9 die von der Feder erzeugte Federkraft überwindet.

Bei Nichtbestromung wird die Ankerscheibe 9 von der Feder auf den Bremsbelagträger 3, insbesondere auf einen auf der der Ankerscheibe 9 zugewandten Seite des Bremsbelagträgers 3 angeordneten Bremsbelag gedrückt, so dass der Bremsbelagträger 3 insbesondere mit seinem anderen Bremsbelag auf das Gehäuseteil 11, insbesondere auf eine am Gehäuseteil 11 ausgebildete Bremsfläche, gedrückt wird.

Der von dem Bremsbelagträger 3 überdeckte Radialabstandsbereich ist beabstandet von dem von den Bolzen 6 überdeckten Radialabstandsbereich.

Vorzugsweise sind die Bolzen 6 in Umfangsrichtung regelmäßig voneinander beabstandet und auf jeweils demselben Radialabstand angeordnet.

Ein in den Figuren nicht dargestelltes Abdichtband, insbesondere aus Gummi, deckt den Bereich zwischen Magnetkörper 4 und Gehäuseteil 11 zur Umgebung hin ab. Dabei umgibt das Abdichtband die Ankerscheibe 8 radial außen, ist also in dem von der Ankerscheibe 9 überdeckten axialen Bereich auf größerem Radialabstand angeordnet als die Ankerscheibe 9, insbesondere also radial beabstandet von der Ankerscheibe 9.

Da die erste Buchse 7 aus einem weicheren Material gefertigt ist als die zweite Buchse 8, schlägt die Ankerscheibe 9 beim Einfallen der Bremsanordnung oder beim Lüften der Bremsanordnung an die zweite Buchse 8 an, wobei dieser Stoß dann an die erste Buchse 7 weitergeleitet wird und von der ersten Buchse 7 abgedämpft wird. Außerdem ist die erste Buchse auf den metallisch ausgeführten Bolzen 6 angeordnet und daher gleitgelagert. Vorzugsweise wird daher als Material für die ersten Buchsen 7 ein Polymer gewählt oder ein Elastomer.

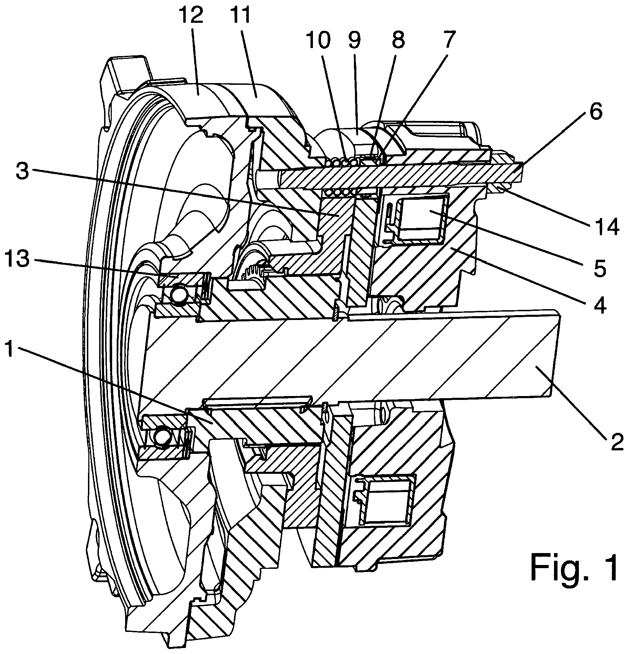

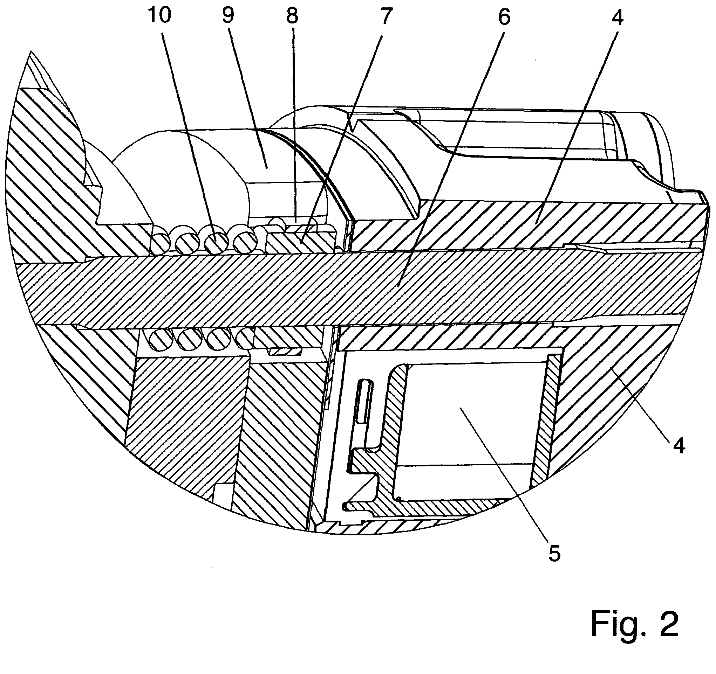

In dem in den Figuren 1 und 2 gezeigten Ausführungsbeispiel ist die erste Buchse 7 axial weniger ausgedehnt als die zweite Buchse 8.

Bei zunehmendem Verschleiß der Bremsbeläge ist der Abstand zwischen dem Magnetkörper 4 und dem Gehäuseteil 11 mittels Drehen der Mutter 14 einstellbar. Denn der Bolzen 6 weist eine Stufe auf, mit welcher er beim Einschrauben des Bolzens 6 in das Gehäuseteil 11 am Gehäuseteil 11 anliegt.

Insbesondere ist hier stets die axiale Richtung parallel zur Drehachsenrichtung der Welle, die Umfangsrichtung bezieht sich auf den Drehwinkel der Welle und der jeweilige Radialabstand wird bezogen auf den Abstand zur Drehachse der Welle.

Das Gehäuseteil 11 ist vorzugsweise mit einem Flanschteil 12, insbesondere Lagerflansch, des Elektromotors lösbar verbunden, wobei die Verbindung aber in hoher Schutzart, also dicht, ausgeführt ist. Dabei nimmt das Flanschteil 12 ein Lager 13 auf, welches die Welle, insbesondere Rotorwelle 2, drehbar lagert und ist mit einem Statorgehäuse des Motors verbunden, welches mit einem weiteren Flanschteil verbunden ist, welches ein weiteres Lager der Rotorwelle aufnimmt.

In einem anderen Ausführungsbeispiel ist die erste Buchse 7 axial gleich oder mehr ausgedehnt als die zweite Buchse 8. Vorzugsweise drückt die Gegenfeder 10 dabei auf die zweite Buchse 8, welche somit an den Magnetkörper 4 angedrückt wird. Die Federkraft der Gegenfeder 10 wird bei dieser Ausführung dann also im Gegensatz zu der Ausführung nach Figur 1 und 2 nicht durch die erste Buchse 7, sondern durch die zweite Buchse 8 geleitet. Die erste Buchse 7 hat dann nur die Funktion der Gleitlagerung auf dem Bolzen 6 und der Abdämpfung des von der Ankerscheibe 9 in die zweite Buchse 7 eingeleiteten Stoßes.

Bei weiteren Ausführungsbeispielen wird die erste Buchse als Ring aus einem Polymer, insbesondere als O-Ring, insbesondere aus Gummi, ausgeführt. Dabei ist dann dieser Ring in die zweite Buchse 8 eingepresst, der aus Stahl ausgeführt ist.

Bei weiteren Ausführungsbeispielen wird also bei einer elektromagnetisch betätigbaren Bremsanordnung für einen Elektromotor die Ankerscheibe drehfest aber axial verschiebbar zu einem Bolzen angeordnet, auf den eine Kunststoffbuchse aufgesteckt ist, die in eine Metallbuchse eingepresst ist.

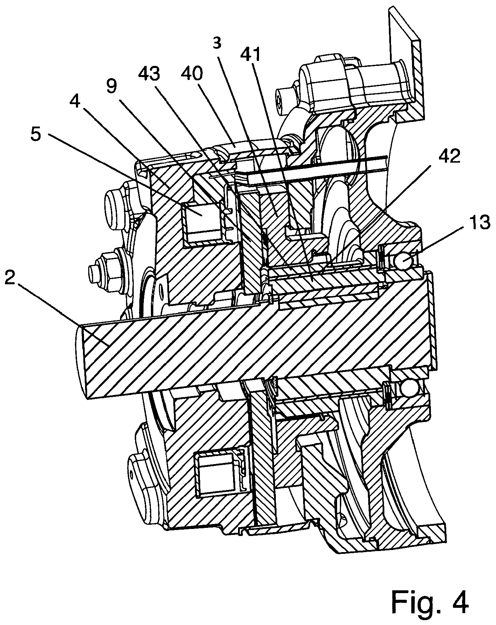

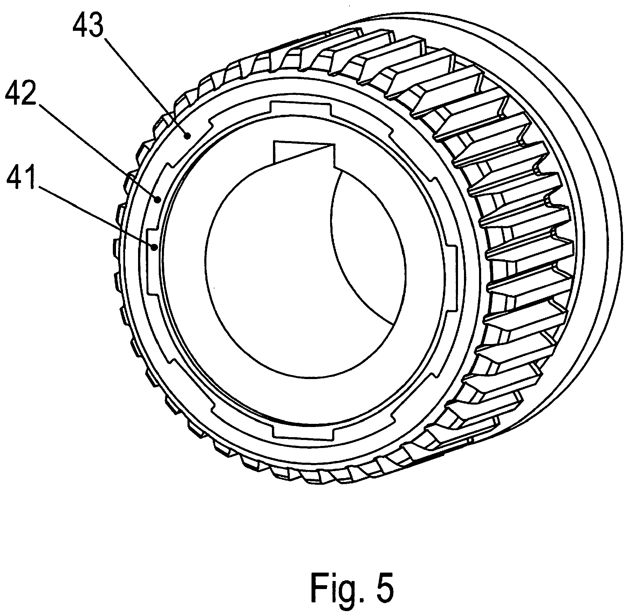

Wie in Figur 4 und 5 gezeigt, ist als alleiniger Unterschied zu den vorgenannten Ausführungsbeispielen der Mitnehmer erfindungsgemäß mehrteilig ausgeführt.

Außerdem ist das Abdichtband 40 gezeigt, welches an seinem ersten axialen Endbereich mit dem Magnetkörper 4 verbunden ist und an dem anderen axialen Endbereich mit dem Gehäuseteil 11.

Das innere Mitnehmerteil 41 ist mittels Passfederverbindung mit der Welle 2 verbunden und weist nach radial außen hervorstehende, axial sich erstreckende Stegbereiche auf, welche in Umfangsrichtung voneinander vorzugsweise regelmäßig beabstandet sind.

Ein äußeres Mitnehmerteil 43 weist nach radial innen hervorstehende, axial sich erstreckende Stegbereiche auf, welche in Umfangsrichtung voneinander vorzugsweise regelmäßig beabstandet sind und auch in Umfangsrichtung beabstandet sind von den Stegbereichen des inneren Mitnehmerteils 41, aber in radialer Richtung überlappen.

Der von den Stegbereichen des äußeren Mitnehmerteils 43 überdeckte Radialabstandsbereich überlappt mit dem von den Stegbereichen des inneren Mitnehmerteils 41.

Radial zwischen dem inneren Mitnehmerteil 41 und dem äußeren Mitnehmerteil 43 ist eine Zwischenschicht 42 angeordnet, die aus einem Kunststoff, insbesondere aus einem Polymer und/oder Elastomer, besteht.

Auf diese Weise sind Drehstöße, also Drehmomentrucke, abdämpfbar. Denn wenn beispielsweise die Bremse gelüftet wird oder einfällt, wird ein Bremsmoment in die Welle, insbesondere Rotorwelle 2, eingeleitet. Dabei fließt das Drehmoment durch die Zwischenschicht 42, so dass diese elastisch ausgelenkt wird und auch Energie absorbiert. Die Stöße sind also verminderbar.

Die Stegbereiche weisen jeweils vorzugsweise ein rechteckförmiges Profil auf. Die Stegbereiche erstrecken sich in axialer Richtung vorzugsweise ohne Schrägungswinkel.

Bei Versagen der Zwischenschicht 42 tritt der dann in Umfangsrichtung spielbehaftete Formschluss zwischen den Stegbereichen des inneren und äußeren Mitnehmerteil s (41, 43) in Kraft. Somit ist die Sicherheit erhöht. Denn bei Versagen der Zwischenschicht 42 ist trotzdem die Bremsfunktion noch gewährleistbar, wobei infolge Aneinanderschlagens der Stegbereiche eine erhöhte Geräuschemission auftritt und somit ein akustisches Warnsignal erzeugt wird.

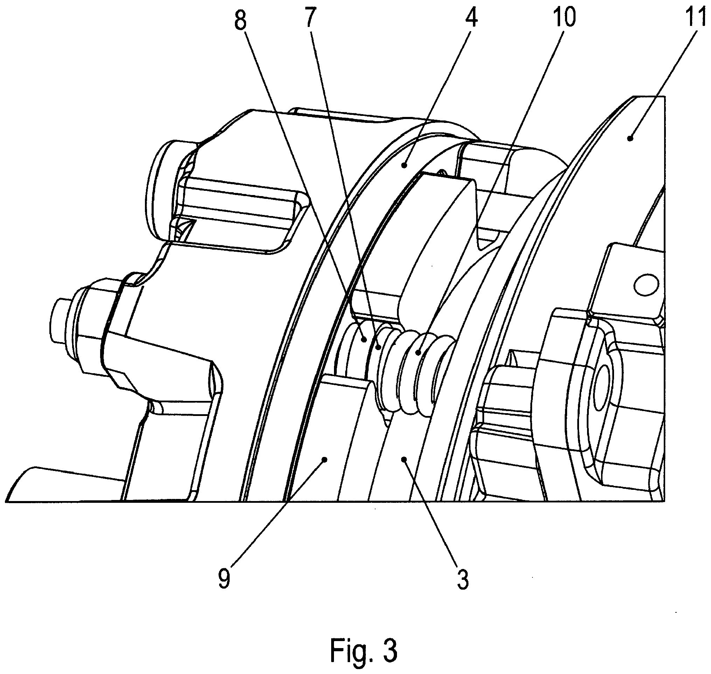

Das äußere Mitnehmerteil 43 weist an seiner radialen Außenseite die Verzahnung auf, insbesondere also diejenige Verzahnung, insbesondere Außenverzahnung, welche der Verzahnung des Mitnehmers 1 der oben beschriebenen Ausführungsbeispiele, insbesondere nach den Figuren 1 bis 3, gleicht.

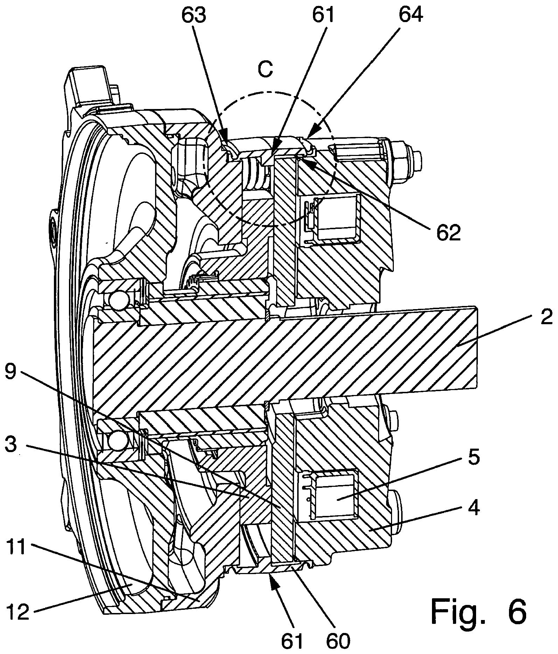

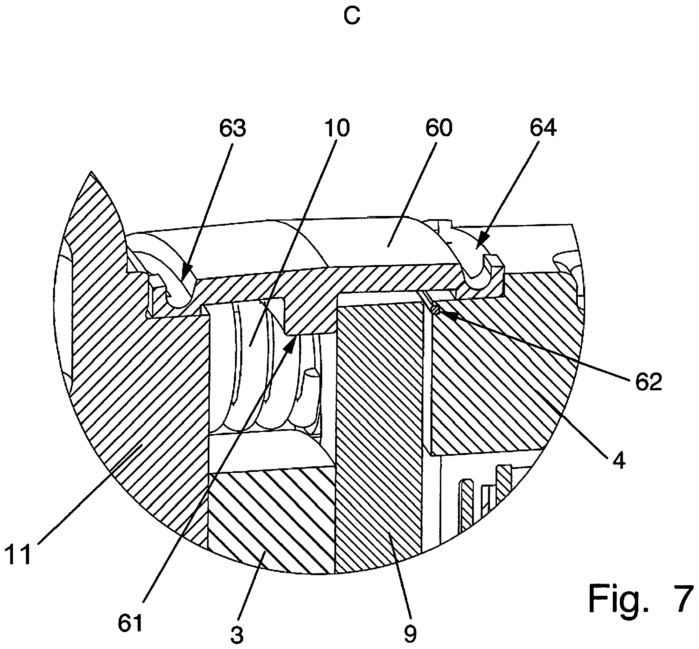

Wie in Figur 6 und 7 gezeigt, ist statt des Abdichtbands 40 ein Abdichtband 60 zum Abdecken des Arbeitsbereichs der Ankerscheibe 9 und des Bremsbelagträgers 3 vorgesehen. Dabei weist das Abdichtband 60 einen nach radial innen hervorstehenden Nasenbereich 61 auf, welcher die Ankerscheibe 9 in axialer Richtung elastisch begrenzt. Somit drückt also die Ankerscheibe 9 gegen den Nasenbereich 61, wenn die Wicklung 5, insbesondere also Spule 5, nicht bestromt wird.

Wenn die Ankerscheibe 9 von der am Magnetkörper abgestützten Feder weggedrückt wird vom Magnetkörper 4, insbesondere also in axialer Richtung hin zum Bremsbelagträger 3, wirkt der Nasenbereich 61 dagegen und dämpft somit das Aufschlagen der Ankerscheibe 9 auf den Bremsbelagträger 3.

Somit ist das Anschlagen der Ankerscheibe 9 an den Bremsbelagträger 3 mittels des elastisch auslenkbaren Nasenbereichs 61 gedämpft.

Das Abdichtband 60 samt Nasenbereich 61 überdeckt einen Radialabstandsbereich, der mit dem von der Ankerscheibe 9 überdeckten Radialabstandsbereich überlappt.

In einer ersten Vertiefung 63, insbesondere in einer ersten in Umfangsrichtung umlaufenden ringförmigen Vertiefung, des Abdichtbands 60 ist eine Schelle befestigbar, welche bei Betätigung das Abdichtband 60 auf das Gehäuseteil 11 aufschrumpft und somit kraftschlüssig andrückt.

Ebenso ist in einer zweiten Vertiefung 64, insbesondere in einer zweiten in Umfangsrichtung umlaufenden ringförmigen Vertiefung, des Abdichtbands 60 eine Schelle befestigbar, welche bei Betätigung das Abdichtband 60 auf den Magnetkörper 4 aufschrumpft und somit kraftschlüssig andrückt.

Am Magnetkörper 4 ist ein Dichtring 62, insbesondere O-Ring, insbesondere Kunststoff- oder Gummi-Ring, in einer in Umfangsrichtung umlaufenden Ringnut des Magnetkörpers 4 angeordnet. Dabei steht der Dichtring 62 axial zur Ankerscheibe 9 hervor, so dass auch das Anschlagen der Ankerscheibe 9 auf den Magnetkörper 4 gedämpft ist.

Der Dichtring 62 ist vorzugsweise auf einem möglichst großen Radialabstand angeordnet, wobei dieser Radialabstand in dem von der Ankerscheibe 9 überdeckten Radialabstandsbereich angeordnet ist.

Vorzugsweise sind der Dichtring 62 und der Nasenbereich 61 axial derart weit ausgedehnt ausgeführt, dass die Ankerscheibe 9 während ihres gesamten Arbeitshubs, also ununterbrochen, sowohl mit dem Dichtring 62 als auch mit dem Nasenbereich 61 in Kontakt. Auf diese Weise sind unstetige Wirkungen verringerbar.

Die Vorspannkraft, insbesondere Federkraft, des Dichtrings 62 ist zumindest bei eingefallener Bremse höher als die vom Nasenbereich 61 bewirkte Federkraft.

Somit wirkt die vom Dichtring 62 erzeugte Federkraft verstärkend zur Federkraft der Feder. Hingegen wirkt die vom Nasenbereich 61 an die Ankerscheibe eingeleitete Federkraft in entgegengesetzter Richtung.

### Bezugszeichenliste

1 Mitnehmer
2 Rotorwelle
3 Bremsbelagträger
4 Magnetkörper
5 Spule
6 Bolzen, insbesondere Gewindebolzen
7 erste Buchse, insbesondere Kunststoffbuchse
8 zweite Buchse, insbesondere Metallbuchse
9 Ankerscheibe
10 Federteil
11 Gehäuseteil
12 Flanschteil, insbesondere Lagerflansch
13 Lager
14 Mutter
40 Abdichtband
41 inneres Mitnehmerteil
42 Zwischenschicht
43 äußeres Mitnehmerteil
60 Abdichtband
61 Nasenbereich
62 Dichtring
63 Vertiefung, insbesondere in Umfangsrichtung umlaufende ringförmige Vertiefung
64 Vertiefung, insbesondere in Umfangsrichtung umlaufende ringförmige Vertiefung

## Patentansprüche

1. Bremsanordnung für einen Elektromotor,
wobei die Bremsanordnung
- einen Bremsbelagträger (3),
- einen Mitnehmer (1) und
- eine Welle
aufweist,
**dadurch gekennzeichnet, dass**
der Mitnehmer (1) ein inneres und ein äußeres Mitnehmerteil (41, 43) aufweist, welche mittels einer Zwischenschicht (42) miteinander verbunden sind,
wobei der Bremsbelagträger (3) eine Innenverzahnung aufweist, welche mit einer Außenverzahnung des äußeren Mitnehmerteils im Eingriff ist, so dass der Bremsbelagträger (3) drehfest aber axial verschiebbar mit dem Mitnehmer (1), verbunden ist,
wobei das innere Mitnehmerteil (41) drehfest, mit der Welle verbunden ist,

2. Bremsanordnung nach Anspruch 1,
**dadurch gekennzeichnet, dass**
der Mitnehmer (1) ein inneres Mitnehmerteil (41) und ein äußeres Mitnehmerteil (43) sowie eine radial zwischen innerem und äußerem Mitnehmerteil (41, 43) angeordnete Zwischenschicht (42) aufweist,
insbesondere wobei das innere Mitnehmerteil (41) und das äußere Mitnehmerteil (43) voneinander beabstandet sind und/oder wobei das innere und das äußere Mitnehmerteil (41, 43) jeweils ringförmig ausgebildet ist und/oder wobei das innere Mitnehmerteil (41) radial innerhalb des äußeren Mitnehmerteils angeordnet ist.

3. Bremsanordnung nach mindestens einem der vorangegangenen Ansprüche,
**dadurch gekennzeichnet, dass**
das innere Mitnehmerteil (41) nach radial außen, insbesondere in die Zwischenschicht (42), hervorragende Stegbereiche aufweist
und/oder dass
das äußere Mitnehmerteil (43) nach radial innen, insbesondere in die Zwischenschicht (42), hervorragende Stegbereiche aufweist.

4. Bremsanordnung nach mindestens einem der vorangegangenen Ansprüche,
**dadurch gekennzeichnet, dass**
die Zwischenschicht (42) aus einem Kunststoff, insbesondere aus einer Vergussmasse, aus einem Klebstoff, aus einem Polymer und/oder aus einem Elastomer, gefertigt ist und/oder die beiden Mitnehmerteile aus Metall, insbesondere Stahl, gefertigt sind.

5. Bremsanordnung nach Anspruch 3,
**dadurch gekennzeichnet, dass**
**der von dem äußeren Mitnehmerteil, insbesondere der von den Stegbereichen des äußeren Mitnehmerteils, überdeckte Radialabstandsbereich überlappt mit dem von dem inneren Mitnehmerteil, insbesondere mit dem von den Stegbereichen des inneren Mitnehmerteils, überdeckten Radialabstandsbereich.**

6. Bremsanordnung nach mindestens einem der vorangegangenen Ansprüche,
**dadurch gekennzeichnet, dass**
die Bremsanordnung
- einen Magnetkörper (4)
- eine Wicklung
- zumindest einen Bolzen (6)
- ein Gehäuseteil (11) mit Bremsfläche
- eine Ankerscheibe (9)
- zumindest ein Federteil (10), insbesondere eine Gegenfeder,
- zumindest eine erste Buchse (7)
aufweist,
wobei das Gehäuseteil (11) mit dem Magnetkörper (4) mittels des Bolzens (6), insbesondere zumindest in Umfangsrichtung formschlüssig, verbunden ist,
wobei die erste Buchse (7) in einer zweiten Buchse (8) aufgenommen ist, insbesondere in die zweite Buchse (8) eingepresst ist,
wobei das am Gehäuseteil (11) abgestützte Federteil (10) die erste Buchse (7) und/oder die zweite Buchse (8) zum Magnetkörper (4) hindrückt,
wobei der von der Ankerscheibe (9) überdeckte Radialabstandsbereich den von der zweiten Buchse (8) überdeckten Radialabstandsbereich enthält, insbesondere umfasst,
wobei der von der Ankerscheibe (9) überdeckte axiale Bereich den von der zweiten Buchse (8) überdeckten axialen Bereich enthält, insbesondere umfasst, oder mit ihm überlappt.

7. **Bremsanordnung nach Anspruch 6,**
**dadurch gekennzeichnet, dass**
die erste Buchse (7) aus einem weicheren und/oder elastischeren Material gefertigt ist als die zweite Buchse (8),
und/oder dass
die erste Buchse (7) aus Gummi, einem gummierten Stoff oder einem Kunststoff, insbesondere einem Polymer, gefertigt ist und die zweite Buchse (8) aus einem Metall, insbesondere aus Stahl, gefertigt ist,
und/oder dass
die erste Buchse (7) in die zweite Buchse (8) eingepresst ist,
insbesondere wobei die erste Buchse (7) ein O-Ring ist.

8. **Bremsanordnung nach Anspruch 6 oder 7,**
**dadurch gekennzeichnet, dass**
die erste Buchse (7) am Bolzen (6) gleitgelagert ist, insbesondere also passgenau auf den Bolzen (6) aufgesteckt ist,
und/oder dass
die Ankerscheibe (9) in Umfangsrichtung spielbehaftet formschlüssig mit der zweiten Buchse (8) und/oder dem Bolzen (6) verbunden ist.

9. **Bremsanordnung nach einem der vorangegangenen Ansprüche 6 bis 8,**
**dadurch gekennzeichnet, dass**
der Bolzen (6) mit dem Gehäuseteil (11) schraubverbunden ist und durch eine axial durch den Magnetkörper (4) durchgehende Ausnehmung durchgeführt ist,
insbesondere wobei eine Mutter (14) auf einen Gewindebereich aufgeschraubt ist, welcher auf der vom Gehäuseteil (11) abgewandten Seite des Magnetkörpers (4) angeordnet ist,
insbesondere wobei der Bolzen (6) eine Stufe aufweist, mit welcher er an einer Stufe einer Stufenbohrung im Gehäuseteil (11) anliegt
oder dass
der Bolzen (6) mit dem Magnetkörper (4) schraubverbunden ist und durch eine axial durch das Gehäuseteil (11) durchgehende Ausnehmung durchgeführt ist,
insbesondere wobei eine Mutter (14) auf einen Gewindebereich aufgeschraubt ist, welcher auf der vom Magnetkörper (4) abgewandten Seite des Gehäuseteils angeordnet ist,
insbesondere wobei der Bolzen (6) eine Stufe aufweist, mit welcher er an einer Stufe einer Stufenbohrung im Magnetkörper (4) anliegt.

10. **Bremsanordnung nach einem der vorangegangenen Ansprüche 6 bis 9,**
**dadurch gekennzeichnet, dass**
in einer Ausnehmung des Magnetkörpers (4) die Wicklung aufgenommen ist,
und/oder wobei die Ankerscheibe (9) axiale bewegbar, spielbehaftet drehfest mit dem Magnetkörper (4), insbesondere mit dem Bolzen (6), verbunden ist,
und/oder dass
zwischen dem Gehäuseteil (11) und der Ankerscheibe (9) ein auf der Welle axial verschiebbarer, mit der Welle drehfest verbundener Bremsbelagträger (3) angeordnet ist.

11. **Bremsanordnung nach einem der vorangegangenen Ansprüche 6 bis 10,**
**dadurch gekennzeichnet, dass**
eine am Magnetkörper (4) abgestützte Feder die Ankerscheibe (9) vom Magnetkörper (4) wegdrückt, insbesondere also in axialer Richtung hin zum Bremsbelagträger (3),
wobei bei Bestromung der Ringwicklung die Ankerscheibe (9) zum Magnetkörper (4) unter Überwindung der von der Feder erzeugte Federkraft hingezogen wird,
und wobei bei Nichtbestromung die Ankerscheibe (9) von der Feder auf den Bremsbelagträger (3), insbesondere auf einen auf der der Ankerscheibe (9) zugewandten Seite des Bremsbelagträgers (3) angeordneten Bremsbelag gedrückt wird,
insbesondere so, dass der Bremsbelagträger (3) insbesondere mit seinem anderen Bremsbelag auf das Gehäuseteil (11), insbesondere auf eine am Gehäuseteil (11) ausgebildete Bremsfläche, gedrückt wird.

12. **Bremsanordnung nach einem der vorangegangenen Ansprüche 6 bis 11,**
**dadurch gekennzeichnet, dass**
das Gehäuseteil (11) mit einem Flanschteil (12) dicht und lösbar verbunden wird, welches ein Lager (13) zur Lagerung der Welle aufnimmt,
und/oder dass
ein Abdichtband (40, 60) den die Ankerscheibe (9) und den Bremsbelagträger (3) aufnehmenden Raumbereich zur Umgebung hin abdeckt und/oder abdichtet.

13. **Bremsanordnung nach einem der vorangegangenen Ansprüche 6 bis 12,**
**dadurch gekennzeichnet, dass**
der von der zweiten Buchse (8) überdeckte axiale Bereich kleiner ist als der von der ersten Buchse (7) überdeckte axiale Bereich und das Federteil (10) die erste Buchse (7) auf den Magnetkörper (4) hindrückt,
oder dass
der von der zweiten Buchse (8) überdeckte axiale Bereich gleich oder größer ist als der von der ersten Buchse (7) überdeckte axiale Bereich und das Federteil (10) die zweite Buchse (8) auf den Magnetkörper (4) hindrückt.

14. Bremsanordnung nach mindestens einem der vorangegangenen Ansprüche,
**dadurch gekennzeichnet, dass**
die Bremsanordnung
- einen Magnetkörper (4),
- eine Wicklung,
- ein Gehäuseteil (11) mit Bremsfläche und
- eine Ankerscheibe (9)
aufweist,
wobei der Bremsbelagträger (3) und die Ankerscheibe (9) axial zwischen dem Gehäuseteil (11) und dem Magnetkörper (4) angeordnet sind,
wobei ein Abdichtband (40, 60) in einem ersten axialen Bereich mit dem Gehäuseteil (11) und in einem zweiten axialen Bereich mit dem Magnetkörper (4) verbunden ist, insbesondere kraftschlüssig angedrückt ist,
wobei das Abdichtband (40, 60) die Ankerscheibe (9) und den Bremsbelagträger (3) radial umgibt, insbesondere den die Ankerscheibe (9) und den Bremsbelagträger (3) aufnehmenden Raumbereich zur Umgebung hin abdeckt und/oder abdichtet,
wobei am Abdichtband (40, 60) ein nach radial innen hervorragender Nasenbereich (61) ausgeformt ist, welcher die Ankerscheibe (9) in axialer Richtung begrenzt.

15. **Bremsanordnung nach Anspruch 14,**
**dadurch gekennzeichnet, dass**
am Magnetkörper (4) ein Dichtring (62) angeordnet ist, welcher die Ankerscheibe (9) entgegen der axialen Richtung begrenzt,
insbesondere wobei der Dichtring (62) in einer im Magnetkörper (4) eingebrachten Ringnut aufgenommen ist,
insbesondere wobei die Ringachse die Drehachse der Welle ist,
und/oder dass
die vom Dichtring (62) erzeugte, auf die Ankerscheibe (9) wirkende Federkraft betragsmäßig größer ist als die vom elastisch gespannten, insbesondere vorgespannten, Nasenbereich (61) erzeugte, auf die Ankerscheibe (9) wirkende Federkraft,
insbesondere bei gelüftetem Zustand der Bremsanordnung, insbesondere also bestromter Wicklung,
und/oder dass
der vom Abdichtband (40, 60), insbesondere vom Nasenbereich (61) des Abdichtbands, überdeckte Radialabstandsbereich mit dem von der Ankerscheibe (9) überdeckten Radialabstandsbereich überlappt,
und/oder dass
der vom Abdichtband (40, 60), insbesondere vom Nasenbereich (61) des Abdichtbands, überdeckte axiale Bereich mit dem von dem Bremsbelagträger (3) überdeckten axialen Bereich überlappt und/oder an den von der Ankerscheibe (9) überdeckten axialen Bereich angrenzt, insbesondere ohne Überlappung,
und/oder dass
die Ringachse des Dichtrings (62) die Drehachse der Welle ist
und/oder dass
der Nasenbereich (61) ringförmig und/oder in Umfangsrichtung umlaufend ausgebildet ist, insbesondere wobei die Ringachse des ringartigen Nasenbereichs (61) die Drehachse der Welle ist und/oder insbesondere wobei die Symmetrieachse des Nasenbereichs (61) die Drehachse der Welle ist,
und/oder dass
das Ringteil auf einem Radialabstand, insbesondere auf dem größten Radialabstand, angeordnet ist, welcher in dem von der Ankerscheibe (9) überdeckten Radialabstandsbereich angeordnet ist.

16. Elektromotor mit Bremsanordnung **nach einem der vorangegangenen Ansprüche 12 bis 15,**
**dadurch gekennzeichnet, dass**
die Welle in dem im Flanschteil (12) aufgenommenen Lager (13) und in einem weiteren Lager gelagert ist, welches in einem weiteren Flanschteil (12) aufgenommen ist, wobei die Flanschteile (12) mit einem Statorgehäuse des Motors verbunden sind,
insbesondere wobei die Welle die Rotorwelle (2) des Motors ist.

## Claims

1. A brake arrangement for an electric motor,
wherein the brake arrangement has
- a brake lining carrier (3)
- a driver (1) and
- a shaft,
**characterised in that**
the driver (1) has an inner and an outer driver part (41, 43) connected to one another by means of an intermediate layer (42),
wherein the brake lining carrier (3) has inner toothing engaged with outer toothing of the outer driver part, so that the brake lining carrier (3) is connected to the driver (1) in a rotationally-fixed yet axially displaceable manner,
wherein the inner driver part (41) is connected to the shaft in a rotationally-fixed manner.

2. A brake arrangement according to claim 1,
**characterised in that**
the driver (1) has an inner driver part (41) and an outer driver part (43) as well as an intermediate layer (42) arranged radially between inner and outer driver part (41, 43),
in particular wherein the inner driver part (41) and the outer driver part (43) are spaced apart from one another and/or wherein the inner and the outer driver part (41, 43) are ring-shaped in each case and/or wherein the inner driver part (41) is arranged radially within the outer driver part.

3. A brake arrangement according to at least one of the preceding claims,
**characterised in that**
the inner driver part (41) has elongated-member regions projecting radially outwards, in particular into the intermediate layer (42),
and/or **in that**
the outer driver part (43) has elongated-member regions projecting radially inwards, in particular into the intermediate layer (42).

4. A brake arrangement according to at least one of the preceding claims,
**characterised in that**
the intermediate layer (42) is manufactured from a plastics material, in particular from a sealing compound, from an adhesive, from a polymer and/or from an elastomer and/or the two driver parts are manufactured from metal, in particular steel.

5. A brake arrangement according to claim 3,
**characterised in that**
the radial clearance region covered by the outer driver part, in particular the radial clearance region covered by the elongated-member regions of the outer driver part, overlaps with the radial clearance region covered by the inner driver part, in particular with the radial clearance region covered by the elongated-member regions of the inner driver part.

6. A brake arrangement according to at least one of the preceding claims,
**characterised in that**
the brake arrangement has
- a magnetic body (4)
- a winding
- at least one bolt (6)
- a housing part (11) with brake surface
- an armature plate (9)
- at least one spring part (10), in particular a counter spring,
- at least one first bush (7)
wherein the housing part (11) is connected to the magnetic body (4) by means of the bolt (6), in particular in a form-locked manner at least in a circumferential direction,
wherein the first bush (7) is received in a second bush (8), in particular is pressed into the second bush (8),
wherein the spring part (10) supported on the housing part (11) pushes the first bush (7) and/or the second bush (8) towards the magnetic body (4),
wherein the radial clearance region covered by the armature plate (9) contains, in particular comprises, the radial clearance region covered by the second bush (8),
wherein the axial region covered by the armature plate (9) contains, in particular comprises, the axial region covered by the second bush (8) or overlaps therewith.

7. A brake arrangement according to claim 6,
**characterised in that**
the first bush (7) is manufactured from a softer and/or more elastic material than the second bush (8),
and/or **in that**
the first bush (7) is manufactured from rubber, a rubberized material or a plastics material, in particular a polymer, and the second bush (8) is manufactured from a metal, in particular from steel,
and/or **in that**
the first bush (7) is pressed into the second bush (8),
in particular wherein the first bush (7) is an O-ring.

8. A brake arrangement according to claim 6 or 7,
**characterised in that**
the first bush (7) is slidingly mounted at the bolt (6), in particular therefore is placed onto the bolt (6) with accuracy of fit,
and/or **in that**
the armature plate (9) is in a circumferential direction connected to the second bush (8) and/or the bolt (6) in a form-locked manner with play.

9. A brake arrangement according to any one of the preceding claims 6 to 8,
**characterised in that**
the bolt (6) is screw-connected to the housing part (11) and is passed through a cutout passing axially through the magnetic body (4),
in particular wherein a nut (14) is screwed onto a threaded region arranged at that side of the magnetic body (4) remote from the housing part (11),
in particular wherein the bolt (6) has a step by means of which it rests against a step of a stepped bore in the housing part (11)
or **in that**
the bolt (6) is screw-connected to the magnetic body (4) and is passed through a cutout passing axially through the housing part (11),
in particular wherein a nut (14) is screwed onto a threaded region arranged at that side of the housing part remote from the magnetic body (4),
in particular wherein the bolt (6) has a step by means of which it rests against a step of a stepped bore in the magnetic body (4).

10. A brake arrangement according to any one of the preceding claims 6 to 9,
**characterised in that**
the winding is received in a cutout of the magnetic body (4),
and/or wherein the armature plate (9) is connected to the magnetic body (4), in particular to the bolt (6), in an axially movable manner and rotationally-fixed manner with play,
and/or **in that**
a brake lining carrier (3), connected to the shaft in a rotationally-fixed manner and axially displaceable on the shaft, is arranged between the housing part (11) and the armature plate (9).

11. A brake arrangement according to any one of the preceding claims 6 to 10,
**characterised in that**
a spring supported on the magnetic body (4) pushes the armature plate (9) away from the magnetic body (4), in particular therefore towards the brake lining carrier (3) in an axial direction,
wherein when current is supplied to the ring winding, the armature plate (9) is drawn towards the magnetic body (4) while overcoming the spring force produced by the spring,
and wherein when current is not supplied, the armature plate (9) is pressed by the spring onto the brake lining carrier (3), in particular onto a brake lining arranged at that side of the brake lining carrier (3) facing the armature plate (9),
in particular in such a manner that the brake lining carrier (3) is pressed, in particular with its other brake lining, onto the housing part (11), in particular onto a brake surface formed at the housing part (11).

12. A brake arrangement according to any one of the preceding claims 6 to 11,
**characterised in that**
the housing part (11) is tightly and detachably connected to a flange part (12) which receives a bearing (13) for mounting of the shaft,
and/or **in that**
a sealing band (40, 60) covers and/or seals the spatial region, receiving the armature plate (9) and the brake lining carrier (3), with respect to the surroundings.

13. A brake arrangement according to any one of the preceding claims 6 to 12,
**characterised in that**
the axial region covered by the second bush (8) is smaller than the axial region covered by the first bush (7) and the spring part (10) presses the first bush (7) onto the magnetic body (4), or **in that**
the axial region covered by the second bush (8) is the same or larger than the axial region covered by the first bush (7) and the spring part (10) presses the second bush (8) onto the magnetic body (4).

14. A brake arrangement according to at least one of the preceding claims,
**characterised in that**
the brake arrangement has
- a magnetic body (4),
- a winding,
- a housing part (11) with brake surface and
- an armature plate (9),
wherein the brake lining carrier (3) and the armature plate (9) are arranged axially between the housing part (11) and the magnetic body (4),
wherein a sealing band (40, 60) is connected to the housing part (11) in a first axial region and to the magnetic body (4) in a second axial region, in particular is pressed thereagainst in a force-locked manner,
wherein the sealing band (40, 60) radially surrounds the armature plate (9) and the brake lining carrier (3), in particular covers and/or seals the spatial region, receiving the armature plate (9) and the brake lining carrier (3), with respect to the surroundings,
wherein a radially inwards projecting projection region (61) is formed at the sealing band (40, 60) and restricts the armature plate (9) in an axial direction.

15. A brake arrangement according to claim 14,
**characterised in that**
a sealing ring (62) is arranged at the magnetic body (4) and restricts the armature plate (9) counter to the axial direction,
in particular wherein the sealing ring (62) is received in a ring groove made in the magnetic body (4),
in particular wherein the ring axis is the axis of rotation of the shaft,
and/or **in that**
the spring force produced by the sealing ring (62) and acting upon the armature plate (9) is greater in amount than the spring force which is produced by the elastically tensioned, in particular pre-tensioned, projection region (61) and which acts upon the armature plate (9),
in particular when the brake arrangement is in the released state, in particular therefore when the winding is supplied with current,
and/or **in that**
the radial clearance region covered by the sealing band (40, 60), in particular by the projection region (61) of the sealing band, overlaps with the radial clearance region covered by the armature plate (9),
and/or **in that**
the axial region covered by the sealing band (40, 60), in particular by the projection region (61) of the sealing band, overlaps with the axial region covered by the brake lining carrier (3) and/or adjoins, in particular without overlap, the axial region covered by the armature plate (9),
and/or **in that**
the ring axis of the sealing ring (62) is the axis of rotation of the shaft
and/or **in that**
the projection region (61) is annular and/or encircling in a circumferential direction, in particular wherein the ring axis of the ring-like projection region (61) is the axis of rotation of the shaft and/or in particular wherein the axis of symmetry of the projection region (61) is the axis of rotation of the shaft,
and/or **in that**
the ring part is arranged at a radial distance, in particular at the greatest radial distance, which is arranged in the radial clearance region covered by the armature plate (9).

16. An electric motor with brake arrangement according to any one of the preceding claims 12 to 15,
**characterised in that**
the shaft is mounted in the bearing (13), received in the flange part (12), and in a further bearing, received in a further flange part (12), wherein the flange parts (12) are connected to a stator housing of the motor,
in particular wherein the shaft is the rotor shaft (2) of the motor.

## Revendications

1. Agencement de frein destiné à un moteur électrique,
lequel agencement de frein comprend
- un support (3) de garniture de freinage,
- un organe d'entraînement (1) et
- un arbre,
**caractérisé par le fait que**
l'organe d'entraînement (1) comporte des parties d'entraînement intérieure et extérieure (41, 43), reliées l'une à l'autre au moyen d'une couche intercalaire (42),
le support (3) de garniture de freinage étant muni d'une denture intérieure en prise avec une denture extérieure de la partie d'entraînement extérieure, de sorte que ledit support (3) de garniture de freinage est relié audit organe d'entraînement (1) avec verrouillage rotatif, mais avec faculté de déplacement axial,
sachant que la partie d'entraînement (41) intérieure est reliée à l'arbre avec verrouillage rotatif.

2. Agencement de frein selon la revendication 1,
**caractérisé par le fait que**
l'organe d'entraînement (1) comprend une partie d'entraînement (41) intérieure et une partie d'entraînement (43) extérieure, ainsi qu'une couche intercalaire (42) interposée radialement entre lesdites parties d'entraînement intérieure et extérieure (41, 43),
sachant notamment que ladite partie d'entraînement (41) intérieure et ladite partie d'entraînement (43) extérieure sont distantes l'une de l'autre, et/ou sachant que lesdites parties d'entraînement intérieure et extérieure (41, 43) sont respectivement de réalisation annulaire, et/ou sachant que ladite partie d'entraînement (41) intérieure est logée radialement à l'intérieur de ladite partie d'entraînement extérieure.

3. Agencement de frein selon au moins l'une des revendications précédentes, **caractérisé par le fait que**
la partie d'entraînement (41) intérieure est pourvue de régions nervurées faisant saillie vers l'extérieur dans le sens radial, notamment dans la couche intercalaire (42) ;
et/ou **par le fait que**
la partie d'entraînement (43) extérieure est dotée de régions nervurées faisant saillie vers l'intérieur dans le sens radial, notamment dans ladite couche intercalaire (42).

4. Agencement de frein selon au moins l'une des revendications précédentes,
**caractérisé par le fait que**
la couche intercalaire (42) est fabriquée en une matière plastique, notamment en une masse coulée, en un adhésif, en un polymère et/ou en un élastomère, et/ou les deux parties d'entraînement sont produites en métal, notamment en acier.

5. Agencement de frein selon la revendication 3,
**caractérisé par le fait que**
la zone d'espacement radial couverte par la partie d'entraînement extérieure, notamment par les régions nervurées de ladite partie d'entraînement extérieure, est en chevauchement avec la zone d'espacement radial couverte par la partie d'entraînement intérieure, notamment par les régions nervurées de ladite partie d'entraînement intérieure.

6. Agencement de frein selon au moins l'une des revendications précédentes,
**caractérisé par le fait que**
ledit agencement de frein comprend
- un corps magnétique (4),
- un enroulement,
- au moins une goupille (6),
- une partie (11) formant carter, munie d'une surface de freinage,
- un disque d'induit (9),
- au moins une pièce élastique (10), en particulier un ressort antagoniste,
- au moins une première douille (7),
la partie (11) formant carter étant reliée au corps magnétique (4) au moyen de la goupille (6), notamment au moins par complémentarité de formes dans la direction périphérique, la première douille (7) étant intégrée dans une seconde douille (8), notamment emmanchée à force dans ladite seconde douille (8),
sachant que la pièce élastique (10), prenant appui contre ladite partie (11) formant carter, meut ladite première douille (7) et/ou ladite seconde douille (8) en direction dudit corps magnétique (4),
sachant que la zone d'espacement radial couverte par le disque d'induit (9) renferme, notamment englobe la zone d'espacement radial couverte par la seconde douille (8), sachant que la région axiale couverte par ledit disque d'induit (9) renferme, notamment englobe la région axiale couverte par ladite seconde douille (8), ou est en chevauchement avec ladite région.

7. Agencement de frein selon la revendication 6,
**caractérisé par le fait que**
la première douille (7) est fabriquée en un matériau plus tendre, et/ou doué d'une plus grande élasticité que celui de la seconde douille (8) ;
et/ou **par le fait que**
ladite première douille (7) est fabriquée en du caoutchouc, en une substance caoutchoutée ou en une matière plastique, notamment en un polymère, et la seconde douille (8) est produite en un métal, notamment en de l'acier ;
et/ou **par le fait que**
ladite première douille (7) est emmanchée à force dans ladite seconde douille (8), sachant, en particulier, que ladite première douille (7) est une bague torique.

8. Agencement de frein selon la revendication 6 ou 7,
**caractérisé par le fait que**
la première douille (7) est montée à glissement sur la goupille (6), c'est-à-dire, en particulier, emboîtée sur ladite goupille (6) avec ajustement précis ;
et/ou **par le fait que**
le disque d'induit (9), affecté d'un jeu dans la direction périphérique, est relié à la seconde douille (8) et/ou à ladite goupille (6) par complémentarité de formes.

9. Agencement de frein selon l'une des revendications 6 à 8 précédentes,
**caractérisé par le fait que**
la goupille (6) est reliée par vissage à la partie (11) formant carter et est guidée, de part en part, à travers un évidement parcourant d'un trait le corps magnétique (4) dans le sens axial,
sachant notamment qu'un écrou (14) est vissé sur une région filetée située du côté dudit corps magnétique (4) qui pointe à l'opposé de ladite partie (11) formant carter, sachant, en particulier, que ladite goupille (6) est pourvue d'un gradin par lequel elle est en applique contre un gradin d'un alésage étagé pratiqué dans ladite partie (11) formant carter ;
ou **par le fait que**
ladite goupille (6) est reliée par vissage audit corps magnétique (4) et est guidée, de part en part, à travers un évidement parcourant d'un trait ladite partie (11) formant carter, dans le sens axial,
sachant notamment qu'un écrou (14) est vissé sur une région filetée située du côté de ladite partie formant carter qui pointe à l'opposé dudit corps magnétique (4), sachant, en particulier, que ladite goupille (6) est nantie d'un gradin par lequel elle est en applique contre un gradin d'un alésage étagé façonné dans ledit corps magnétique (4).

10. Agencement de frein selon l'une des revendications 6 à 9 précédentes,
**caractérisé par le fait que**
l'enroulement est intégré dans un évidement du corps magnétique (4),
et/ou sachant que le disque d'induit (9), affecté d'un jeu, est relié audit corps magnétique (4) et notamment à la goupille (6), avec verrouillage rotatif et mobilité axiale ;
et/ou **par le fait**
**qu'**un support (3) de garniture de freinage, apte à se déplacer axialement sur l'arbre et relié audit arbre avec verrouillage rotatif, est interposé entre la partie (11) formant carter et ledit disque d'induit (9).

11. Agencement de frein selon l'une des revendications 6 à 10 précédentes,
**caractérisé par le fait**
**qu'**un ressort, prenant appui contre le corps magnétique (4), repousse le disque d'induit (9) à l'écart dudit corps magnétique (4), c'est-à-dire, en particulier, dans le sens axial en direction du support (3) de garniture de freinage,
sachant que, lorsque l'enroulement annulaire est alimenté en courant, ledit disque d'induit (9) est attiré vers ledit corps magnétique (4) en surmontant la force élastique engendrée par ledit ressort
et sachant que, en l'absence d'alimentation en courant, ledit disque d'induit (9) est pressé par ledit ressort sur ledit support (3) de garniture de freinage et, en particulier, sur une garniture de freinage située du côté dudit support (3) de garniture de freinage qui pointe vers ledit disque d'induit (9),
en particulier de façon telle que ledit support (3) de garniture de freinage soit pressé, notamment par son autre garniture de freinage, sur la partie (11) formant carter et, en particulier, sur une surface de freinage ménagée sur ladite partie (11) formant carter.

12. Agencement de frein selon l'une des revendications 6 à 11 précédentes,
**caractérisé par le fait que**
la partie (11) formant carter est reliée, de manière étanche et libérable, à une pièce de bridage (12) recevant un palier (13) dévolu au montage de l'arbre ;
et/ou **par le fait**
**qu'**une bande d'étanchement (40, 60) assure l'étanchéité et/ou le recouvrement, en direction de l'espace environnant, de la zone spatiale recevant le disque d'induit (9) et le support (3) de garniture de freinage.

13. Agencement de frein selon l'une des revendications 6 à 12 précédentes,
**caractérisé par le fait que**
la région axiale couverte par la seconde douille (8) est plus petite que la région axiale couverte par la première douille (7), et la pièce élastique (10) meut ladite première douille (7) en direction du corps magnétique (4) ;
ou **par le fait que**
la région axiale couverte par ladite seconde douille (8) est identique ou supérieure à la région axiale couverte par ladite première douille (7), et ladite pièce élastique (10) meut ladite seconde douille (8) en direction dudit corps magnétique (4).

14. Agencement de frein selon au moins l'une des revendications précédentes,
**caractérisé par le fait que**
ledit agencement de frein comprend
- un corps magnétique (4),
- un enroulement,
- une partie (11) formant carter, munie d'une surface de freinage et
- un disque d'induit (9),
le support (3) de garniture de freinage, et ledit disque d'induit (9), étant interposés axialement entre ladite partie (11) formant carter et ledit corps magnétique (4),
sachant qu'une bande d'étanchement (40, 60) est reliée à ladite partie (11) formant carter dans une première région axiale, et audit corps magnétique (4) dans une seconde région axiale, en étant notamment pressée par engagement positif,
laquelle bande d'étanchement (40, 60) entoure radialement le disque d'induit (9) et le support (3) de garniture de freinage, et assure notamment l'étanchéité et/ou le recouvrement, en direction de l'espace environnant, de la zone spatiale recevant ledit disque d'induit (9) et ledit support (3) de garniture de freinage,
sachant qu'une région protubérante (61), ménagée sur ladite bande d'étanchement (40, 60) et faisant saillie vers l'intérieur dans le sens radial, délimite ledit disque d'induit (9) dans la direction axiale.

15. Agencement de frein selon la revendication 14,
**caractérisé par le fait**
**qu'**une bague d'étanchement (62), implantée sur le corps magnétique (4), délimite le disque d'induit (9) en sens contraire de la direction axiale,
laquelle bague d'étanchement (62) est notamment intégrée dans une rainure annulaire pratiquée dans ledit corps magnétique (4),
sachant, en particulier, que l'axe de ladite bague constitue l'axe de rotation de l'arbre ;
et/ou par le fait que
la grandeur de la force élastique, engendrée par ladite bague d'étanchement (62) et agissant sur le disque d'induit (9), est supérieure à celle de la force élastique agissant sur ledit disque d'induit (9) et engendrée par la région protubérante (61) bandée élastiquement, notamment précontrainte,
en particulier à l'état desserré dudit agencement de frein, c'est-à-dire notamment lorsque l'enroulement est alimenté en courant ;
et/ou par le fait que
la zone d'espacement radial couverte par la bande d'étanchement (40, 60), en particulier par la région protubérante (61) de ladite bande d'étanchement, est en chevauchement avec la zone d'espacement radial couverte par le disque d'induit (9) ;
et/ou par le fait que
la région axiale couverte par ladite bande d'étanchement (40, 60), en particulier par la région protubérante (61) de ladite bande d'étanchement, est en chevauchement avec la région axiale couverte par le support (3) de garniture de freinage, et/ou est limitrophe, notamment sans chevauchement, de la région axiale couverte par le disque d'induit (9) ; et/ou par le fait que
l'axe de ladite bague d'étanchement (62) constitue l'axe de rotation de l'arbre ;
et/ou par le fait que
la région protubérante (61) est de réalisation annulaire et/ou s'étendant circonférentiellement dans la direction périphérique, sachant notamment que l'axe de ladite région protubérante (61), de type annulaire, constitue l'axe de rotation de l'arbre et/ou sachant, en particulier, que l'axe de symétrie de ladite région protubérante (61) constitue l'axe de rotation dudit arbre ;
et/ou par le fait que
la pièce annulaire est disposée à un espacement radial, en particulier à l'espacement radial maximal situé dans la zone d'espacement radial couverte par le disque d'induit (9).

16. Moteur électrique équipé d'un agencement de frein conforme à l'une des revendications 12 à 15 précédentes,
**caractérisé par le fait que**
l'arbre est monté dans le palier (13) intégré dans la pièce de bridage (12), et dans un palier supplémentaire intégré dans une pièce de bridage (12) supplémentaire, lesdites pièces de bridage (12) étant reliées à un carter statorique du moteur,
l'arbre matérialisant notamment l'arbre rotorique (2) dudit moteur.
